(19) Europäisches Patentamt
European Patent Office
Office européen des brevets

(11) **EP 4 345 550 A1**

(12) **EUROPEAN PATENT APPLICATION**

(43) Date of publication:
**03.04.2024 Bulletin 2024/14**

(21) Application number: **23196003.0**

(22) Date of filing: **07.09.2023**

(51) International Patent Classification (IPC):
**G05B 19/042** (2006.01)     **G05B 17/02** (2006.01)

(52) Cooperative Patent Classification (CPC):
**G05B 19/0421; G05B 17/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 US 202263411258 P
24.08.2023 US 202318237484**

(71) Applicant: **Baker Hughes Holdings LLC
Houston, TX 77073 (US)**

(72) Inventor: **MAYES, Nathaniel Dean
Houston, 77073 (US)**

(74) Representative: **Illingworth-Law, William
Illingworth
Baker Hughes
245 Hammersmith
Chalk Hill Road
London W6 8DW (GB)**

(54) **WAVEFORM TRAINING OF MONITORING DEVICES**

(57)     A device and system for training condition monitoring systems are provided. In one embodiment, the device can include a plurality of connections arranged to communicatively couple the device to one or more condition monitoring systems. The device can also include a computing system including a power generator arranged to retrieve power from the one or more condition monitoring systems to power the device, at least one data processor and a memory storing instructions which, when executed by the at least one processor, cause the at least one processor to perform operations including: receiving, from the one or more condition monitoring systems, data characterizing a sensor type of a plurality of sensor types to be coupled to the one or more condition monitoring systems, determining a simulated waveform characteristic of the sensor type, and transmitting the simulated waveform to the one or more condition monitoring systems to simulate an output from the sensor type.

**FIG. 1A**

**Description**

RELATED APPLICATION

This application claims priority under 35 U.S.C. § 119(e) to U.S. Provisional Application No. 63/411,258 filed September 29, 2022, the entire contents of which are hereby expressly incorporated by reference herein.

FIELD

The present application relates to systems and methods for training monitoring devices utilizing simulated waveforms.

BACKGROUND

Certain equipment and facilities, such as power generation equipment and facilities, oil and gas equipment and facilities, aircraft equipment and facilities, manufacturing equipment and facilities, and the like, include monitoring systems and processes. For example, power generation plants can include monitoring of turbine systems and processes for maintaining operations of turbine systems. Oil and gas operations can include monitoring of carbonaceous fuel retrieval systems and pipeline networks. Aircraft systems can include monitoring of airplanes and maintenance hangars useful in maintaining air quality and providing data for maintenance support. During equipment operations, the equipment can degrade, encounter undesired conditions such as corrosion, wear and tear, and the like potentially affecting overall equipment effectiveness. Monitoring systems, such as asset condition monitoring systems, can be used to detect undesired equipment conditions. The efficiency of the monitoring systems can depend on the accuracy of calibration and quality of training of the monitoring systems, tailored to the corresponding equipment.

SUMMARY

In general, devices, systems and methods are provided for training condition monitoring systems utilizing simulated waveforms. In some embodiments, the device can include a plurality of connections arranged to communicatively couple the device to one or more condition monitoring systems and a computing system including a power generator arranged to retrieve power from the one or more condition monitoring systems to power the device, at least one data processor and a memory storing instructions which, when executed by the at least one processor, cause the at least one processor to perform operations. The operations performed by the processor can include receiving, from the one or more condition monitoring systems, data characterizing a sensor type of a plurality of sensor types to be coupled to the one or more condition monitoring systems, determining a simulated waveform characteristic of the sensor type and transmitting the simulated waveform to the one or more condition monitoring systems to simulate an output from the sensor type.

In some embodiments, the device can include a digital to analog converter arranged to convert the simulated waveform determined by the processor from a digital signal to an analog signal to be transmitted to the one or more condition monitoring systems.

In some embodiments, the plurality of sensor types can include at least one of a temperature sensor, a current sensor, a voltage sensor, a pressure sensor, a displacement sensor, a velocity sensor, an acceleration sensor, a flow sensors or any combination thereof, arranged to monitor an operation of a component of an industrial environment. In some embodiments, the simulated waveform may be characteristic of an output from the sensor type.

In some embodiments, the memory may be further arranged to store data characterizing a plurality of simulated waveforms characteristic of the plurality of sensor types and the processor may be arranged to determine the simulated waveform based on the data characterizing the plurality of simulated waveforms stored on the memory.

In some embodiments, the simulated waveform can include one or more features characteristic of data recorded the sensor type monitoring the operation of the component.

In some embodiments, the device can include an input arranged to couple the device to a second computing system arranged to program the computing system.

In some embodiments, the device can include a graphical user interface display arranged to display one or more operations performed by the device.

In some embodiments, the one or more condition monitoring systems can include a plurality of condition monitoring systems, connected to the device in parallel, and the processor arranged to transmit the simulated waveform to the plurality of condition monitoring systems.

In some embodiments, the device can include a second plurality of connections arranged to communicatively couple the device to one or more second devices, similar to the device.

In another aspect a system for training condition monitoring systems utilizing simulated waveforms is provided. In some embodiments, the system can include a plurality of devices communicatively coupled to one another in a point-to-point topography and arranged to monitor one or more condition monitoring systems. Each device of the plurality can include a plurality of first connections arranged to communicatively couple the device to the one or more condition monitoring systems, a power generator arranged to retrieve power from the one or more condition monitoring systems to operate the device and a computing system including at least one data processor and a memory storing instructions which, when executed by the at least one processor, cause the at least one processor to perform operations. The operations performed by the at least one processor can include receiving, from the condition monitoring system, data characterizing a sensor type of a plurality of sensor types to be coupled to the one or more condition monitoring systems, determining a simulated waveform characteristic of the sensor type and transmitting the simulated waveform to the one or more condition monitoring systems to simulate an output from the sensor type.

In some embodiments, the plurality of devices may be arranged to perform a startup function to determine a master device and one or more slave devices of the plurality of devices and the at least one processor of the master device may be further arranged to determine a schedule for the transmission of the plurality of simulated waveforms from the plurality of devices to the one or more condition monitoring systems.

In some embodiments, the at least one processor of the master device may be further arranged to transmit the schedule to the one or more slave devices and the master device and each of the one or more slave devices may be arranged to transmit their simulated waveform to the one or more condition monitoring systems based on the schedule.

In some embodiments, the schedule of the plurality of transmitted simulated waveforms can be arranged to mimic a series of waveforms that would typically by provided to the one or more condition monitoring systems by the plurality of sensor types monitoring an industrial asset.

In some embodiments, each of the plurality of devices can include a graphical user interface display arranged to display one or more operations performed by the device and the at least one processor of the master device can be further arranged to perform operations including determining that one or more slave devices has been removed from the system and providing a notification to the graphical user interface display indicating that the one or more slave devices has been removed from the system.

In some embodiments, each of the plurality of devices can include a graphical user interface display arranged to display one or more operations performed by the device and the at least one processor of the master device may be further arranged to perform operations including determining that one or more slave devices has been added to the system and providing a notification to the graphical user interface display indicating that the one or more slave devices has been added from the system.

In some embodiments, the at least one processor of the master device can be further arranged to perform operations including determining that a second master device has been added to the system upstream of the master device and notifying upstream devices and downstream devices of the one or more slave devices that the second master device has been added to the system.

In some embodiments, the at least one processor of the second master device can further be arranged to determine an updated schedule for the transmission of the plurality of simulated waveforms from the plurality of devices to the one or more condition monitoring systems.

In some embodiments, the master device may be removed from the system and the at least one processor of a first slave device of the one or more slave devices can be arranged to perform operations including determining that the master device has been removed from the system and repeating the step of performing the startup function to determine a new master device and one or more slave devices of the plurality of devices.

In some embodiments each of the plurality of devices can include a graphical user interface display arranged to display one or more operations performed by the device and the at least one processor of the master device can be further arranged to perform operations including determining that there may be too many slave devices in the system and providing a notification to the graphical user interface display indicating that there may be too many slave devices in the system.

BRIEF DESCRIPTION OF THE DRAWINGS

These and other features will be more readily understood from the following detailed description taken in conjunction with the accompanying drawings, in which:

FIGS. 1A and 1B illustrate examples of a system, in accordance with embodiments presented herein;

FIGS. 2A-2F are block diagrams illustrating details of an example of a training device, in accordance with embodiments presented herein;

FIGS. 3A and 3B are schematic illustrations of examples of connections of the example system of FIGS. 1A and 1B;

FIGS. 4A and 4B are schematic illustrations of examples of arbitration processes executed by a training device, in accordance with embodiments presented herein

FIG. 5 is a diagram illustrating a plurality of training devices coupled together to form a communicating network of training devices

FIG. 6 is a flow chart illustrating a method of performing master arbitration in a system of training devices and further performing time synchronization within the system; and

FIG. 7 is a block diagram of a computing system suitable for use in implementing the computerized components described herein.

It is noted that the drawings are not necessarily to scale. The drawings are intended to depict only typical aspects of the subject matter disclosed herein, and therefore should not be considered as limiting the scope of the disclosure.

DETAILED DESCRIPTION

The present application relates to training monitoring devices utilizing simulated waveforms. In particular, the present application relates to a computing system (e.g., a waveform generator) that transmits simulated waveforms to condition monitoring systems for training the condition monitoring systems. The waveform generator can be coupled to a power generator configured to retrieve power from the condition monitoring systems during a transmission of the simulated waveforms.

Training of condition monitoring systems can be an important step in an industrial environment, where a number of machines that may be operating together need to be monitored to ensure correct performance of tasks, which can be related to mass producing a product, processing certain chemicals, and the like. Generally, each of the machines in the industrial environment may include a number of sensors attached thereto to monitor various conditions within a respective machine. For example, in a motor, one sensor may measure a rotational speed of the motor's shaft, while another sensor may measure an internal temperature of the motor. In any case, the data received by the sensors may be provided as inputs into a condition monitoring system, such that the received data may be presented to users in a coherent and comprehensible manner. The received data may then be processed or analyzed by the condition monitoring system using various types of data processing or analysis tools or the like. As such, if the condition monitoring system processes the received data, the condition monitoring system may present the received data in a manner that may be interpreted or analyzed by a user.

The condition monitoring system can accurately processes the data if the condition monitoring system is correctly trained (with the correct waveform) to process the waveform types that can be produced by a machine it is connected to. In some implementations, the machines are updated or modified, resulting into a modification of the output waveforms. To correctly process updated waveforms, the condition monitoring systems need to be retrained. In some implementations, a condition monitoring system can be disconnected from a machine and reconnected to a different type of machine that generates a different type of waveforms. To correctly process a different type of waveforms, the condition monitoring systems also need to be retrained. Retraining condition monitoring system is traditionally performed at a condition monitoring system manufacturer site or at a central service site, remote from the industrial environment including the machines that need to be monitored. Therefore, it can be beneficial to increase the maneuverability of a training system to enable (re)training at the machine (within the industrial environment) and to increase the accuracy of condition monitoring systems by retraining them with updated waveforms, as updates or changes appear in the machine. The training system described herein can be configured to enable (re)training of the condition monitoring systems at the machine, by generating power supply from the connection with the condition monitoring system, making the training system independent from external power supplies. In some embodiments, the training system described herein can be designed to have a length smaller than approximately 5 inch (15 mm), to increase the maneuverability of the training system, making it easy to be transported and attached to the condition monitoring systems at the machine.

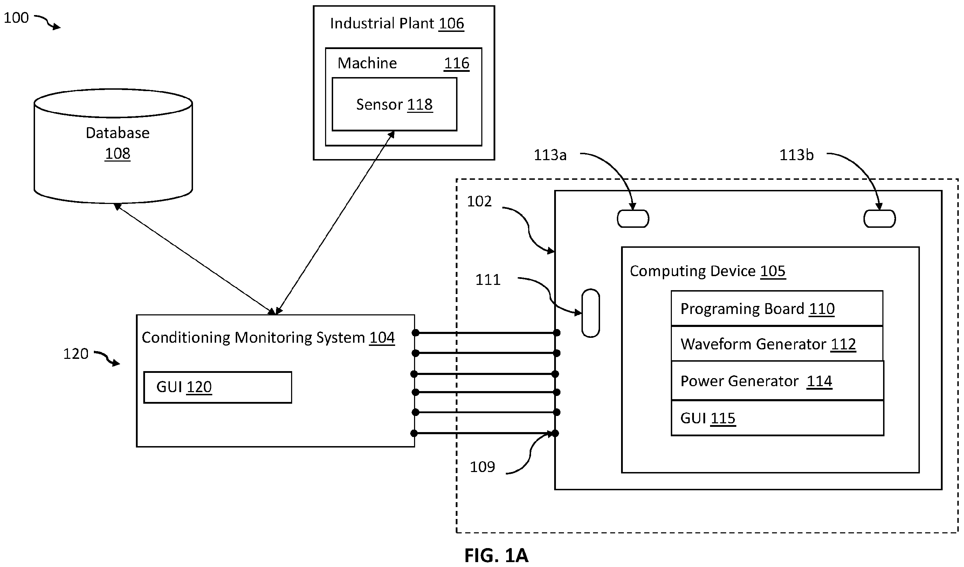

Various devices and methods are provided for using a training system to generate simulated waveforms tailored for training condition monitoring systems. The training systems and devices can be directly connected to condition monitoring systems, located at machine site, to train the condition monitoring systems based on a selection of a machine type and machine version. In some implementations, a training device can include a computing device including three boards, such as three printed wiring assemblies (PWAs). One board of the training device can be used for initial programming of the training device. A second board of the training device can be configured for generating simulated waveforms and for routing the simulated waveforms. A third board of the training device can be used to generate board power, board to board communication, and the digital to analog converter. An advantage of having three boards in the training device is to only use the programmer connector for initial configuration setup of the training device and then remove the programmer connector (allowing program update to occur over the USB). After the initial setup of the training device, the two remaining boards can be connected together, fitting within the back of a condition monitoring system. Additional details with regard to how the training device may dynamically train the condition monitoring system is described with reference to FIGS. 1A-5.

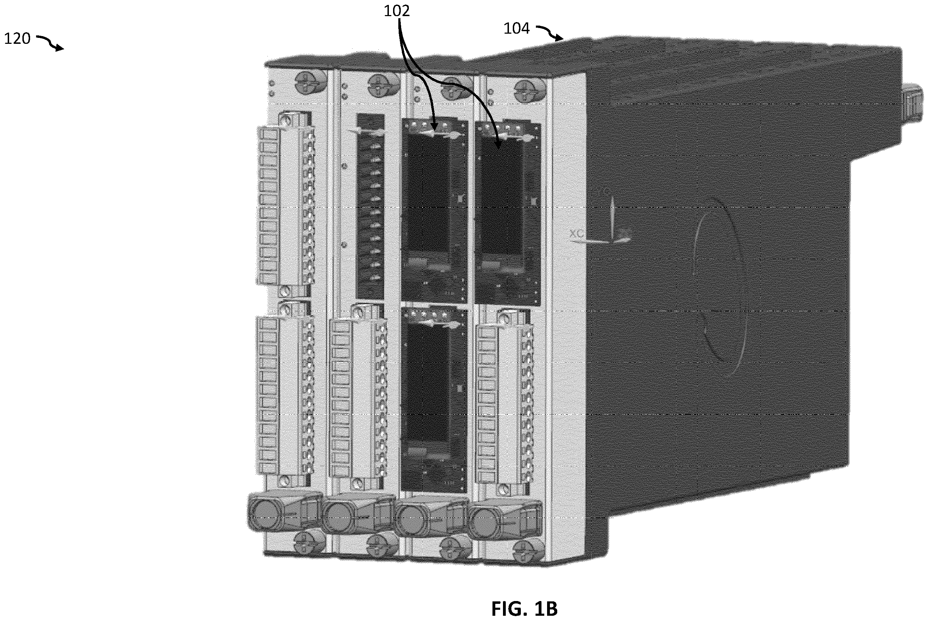

By way of introduction, FIGS. 1A and 1B illustrate a block diagram of an industrial monitor training system 100 in which various types of machine monitors of industrial processes may be trained. The industrial monitor training system 100 can include a training device 102, a condition monitoring system 104, an industrial plant 106, and a database 108. The training device 102 can be configured to generate simulated waveforms for training the condition monitoring system 104. The training device 102 can include a computing system 105 which can further include three boards: a programing board 110, a waveform generator 112, and a power generator 114. The programing board 110, the waveform generator 112, and the power generator 114 can include printed wiring assemblies configured to perform functions of the training device. The programing board 110 can be used for initial programming of the waveform generator 112 of the training device 102, the initial training including execution of an initial configuration setup of the waveform generator 112. The programing board 110 can be used for debugging and reprogramming the waveform generator 112. In some embodiments, the programing board 110 can be removed (detached or snapped off) after the initial programming of the training device 102. The waveform generator 112 can include one or more processors configured to generate simulated waveforms characteristic to the industrial plant 106 and for routing the simulated waveforms to the condition monitoring system 104. The training device 102 can include a plurality of connections 109 configured to communicatively couple the device to the condition monitoring system 104, as discussed in greater detail below. In some embodiments, a program of the waveform generator 112 can be updated over a second connection 111. In some embodiments, the second connection 111 can be a Universal Serial Bus (USB), a Bluetooth connection, or the like. The power generator 114 can be used to generate power for the components of the training device 102 (the programing board 110 and the waveform generator 112) though board to board communication and by using a digital to analog converter (not shown). In some embodiments, the waveform generator 112 can function solely on power retrieved from the condition monitoring system 104 by the power generator 114. The waveform generator 112 can be configured to convert the power from -24V to +4.6V. After the initial setup of the training device 102, the two remaining boards (the programing board 110 and the waveform generator 112) can be connected together and coupled to the condition monitoring system 104. An example of coupling between the training device 102 and condition monitoring system 104 is illustrated by FIGS. 1A and 1B.

In some embodiments, industrial monitor training system 100 can include a plurality of training devices 102 configured to train the condition monitoring systems 104. Accordingly, in some embodiments, the training device 102 can further include a plurality of third connections 113a, 113b configured to communicatively couple the training device 102 to one or more similar training devices in order to perform an arbitration/synchronization procedure, as discussed in greater detail below. In some embodiments, the training device 102 can further include a graphical user interface (GUI) 115. The GUI 115 can be configured to display information regarding the operation of the training device, as discussed in greater detail below.

The condition monitoring system 104 may receive simulated waveforms from the training device 102 and can also receive data from various components (e.g., machines) that may be part of an industrial environment. For example, the condition monitoring system 104 may monitor components used in an industrial plant 106. The industrial plant 106 may include any type of industrial environment where different components or machines may be used to complete one or more industrial processes. As such, the industrial plant 106 may correspond to an oil refinery, a manufacturing facility, a turbomachine system, a power generation system, a gasification system, a chemical production system, a gas turbine system, a stream turbine system, a combined cycle system, a power plant, or the like. The condition monitoring system 104 includes a dynamic GUI 120 that may enable a user to perform various types of data processing or analysis using tools provided by the condition monitoring system 104 or by separate data processing or analysis products. For instance, the user may generate a graph plotting a statistical trend of the data received from a particular sensor 118 over time. In one embodiment, after the statistical trend graph has been generated, the user may dynamically control the data being analyzed by the tool by selecting a different sensor 118 visualization displayed in the dynamic GUI 120.

The components in the industrial plant 106 may include one or more machines 116 or components such as a motor, a gas turbine, a heat exchanger, centrifugal pumps, centrifugal compressors, fans, reciprocating compressors, generators, steam turbines, wind turbines, piping, axial compressors, screw compressors, gears, turbo-expanders, blowers, agitators, mixers, pulp refiners, ball mills, crushers, pulverizers, extruders, pelletizers, cooling towers, and the like. Each machine 116 may include one or more sensors 118 that may monitor various aspects of a respective machine 116. The sensors 118 may include temperature sensors, current sensors, voltage sensors, pressure sensors, displacement sensors, velocity sensors, acceleration sensors, flow sensors, clearance sensors, flame sensors, gas composition sensors, vibration sensors, and any other type of sensor that may provide information with respect to the operation of the respective machine 116.

Generally, the data acquired by the sensors 118 may be received by the condition monitoring system 104 via a direct link (i.e., hardwired), a network link, or a portable memory device (e.g., Universal Serial Bus memory drive). In one embodiment, the condition monitoring system 104 may include a dynamic graphical user interface (GUI) 120 that may generate visualizations that represent the machines 116 and the sensors 118 being monitored by the condition monitoring system 104. As such, users of the condition monitoring system 104 may monitor the health or status of machines 116 in the industrial plant 106 via the dynamic GUI 120. Further, the condition monitoring system 104 may be used to measure one or more mechanical devices of larger mechanical systems (e.g., steam turbine systems, hydraulic turbine systems, wind turbine systems, reactors, gasifiers, gas treatment systems, industrial automation systems, or other suitable mechanical systems).

In addition to the simulated waveforms generated by the training device 102 and the data acquired by the sensors 118, the condition monitoring system 104 may receive data from a database 108. The database 108 may be stored within the condition monitoring system 104, or can be external to the condition monitoring system 104, being stored in a server, in a cloud-computing device, or the like. The database 108 may include historical data related to the simulated waveforms used for training corresponding to the machine 116, the data acquired by the sensors 118, calculated data associated with the machine 116, calculated data associated with sensor 118, results from previous data processing or analysis functions performed on data associated with a machine 116 or sensor 118, or other contextual data related to the industrial plant 106. For example, the database 108 may include data related to the historical training conditions of the condition monitoring system 104 corresponding to the operating conditions (e.g., when operating at full capacity) of the industrial plant 106 such as a plant historian or the like. Although FIGS. 1A and 1B have been described with respect to the industrial plant 106, it should be noted that the systems and techniques described herein may be applied to other systems outside of the industrial environment. As such, the systems and techniques described herein should not be limited to industrial environments and the like.

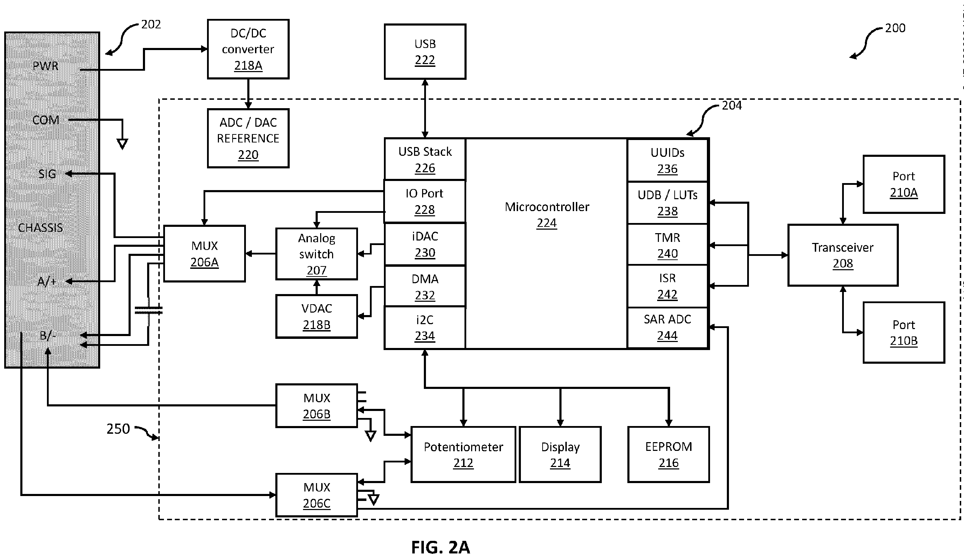

Referring now to FIGS. 2A-2F, a schematic illustration of examples of portions of the training device 200, 250, 270, 280, 290 are depicted. FIG. 2A illustrates an example of a waveform generator 200 of a training device (e.g., the waveform generator 112 of the training device 102 described with reference to FIGS. 1A and 1B) is generally depicted. The waveform generator 200 includes a physical connection 202, a control unit 204, multiplexers 206A, 206B, 206C, an analog switch 207, a transceiver 208, ports 210A, 210B, a high voltage digital potentiometer 212, a display 214, an electrically erasable programmable read-only memory (EEPROM) 216, converters 218A, 218B, a reference signal generator 220, and a USB drive 222. It should be noted that, in some embodiments, the USB drive 222 can be a Bluetooth connection, or the like.

The physical connection 202 can include a connection to a condition monitoring system (e.g., the condition monitoring system 104 described with reference to FIGS. 1A and 1B). The physical connection 202 can be configured to provide power supply through a connection with an external system (e.g., the condition monitoring system). For example, the power used by the waveform generator 200 of the training device can be designed to be either powered from the USB 222 or from the physical connection 202 configured to retrieve the power from the condition monitoring system. When the waveform generator 200 is powered solely by the USB port 222, the waveform generator 200 may not be able to generate -24V signals. When the waveform generator 200 is powered though the physical connection 202, the waveform generator 200 can converts - 24V to +4.6V to power all sub systems of the waveform generator 200.

The control unit 204 can include a microcontroller (computing system) 224 and communication components: USB stack 226, input/output (I/O) ports 228, current output digital-to-analog converter (IDAC) 230, direct memory access 232, inter-integrated circuit (i2C) bus 234, universally unique identifiers 236, hardware (UDB) or lookup table (LUT) 238, triple modular redundancy (TMR) 240, interrupt service routine (ISR) 242, and successive-approximation (SAR) ADC 244. The communication components may be wireless or wired communication components that may facilitate communication between the microcontroller 224 and other components of the training device, the condition monitoring system, the machines, the sensors, the database, other control or monitoring systems, and the like. The microcontroller 224 includes a processor, a memory, and a storage. The processor may be any type of computer processor or microprocessor capable of executing computer-executable code. The 28 and the storage may be any suitable articles of manufacture that can serve as media to store processor-executable code, data, or the like. These articles of manufacture may represent non-transitory computer-readable media (i.e., any suitable form of memory or storage) that may store the processor-executable code used by the processor to, among other things, generate simulated waveforms for training condition monitoring system. The control unit 204 can be dynamically linked to the display 214 to enable visualization of data processing.

The multiplexers 206A, 206B, 206C can include (4:1 and 1:4) data selectors having enable input pins set high making the address pins always active. The analog switch 207 can include a resistor stuffing option for line level source selection. The analog switch 207 can include a 0 ohm resistors that can be used to either route out the internal digital to analog converter signal received from the control unit 204 within the microcontroller 224 or external high bit resolution digital-to-digital to analog converter signal.

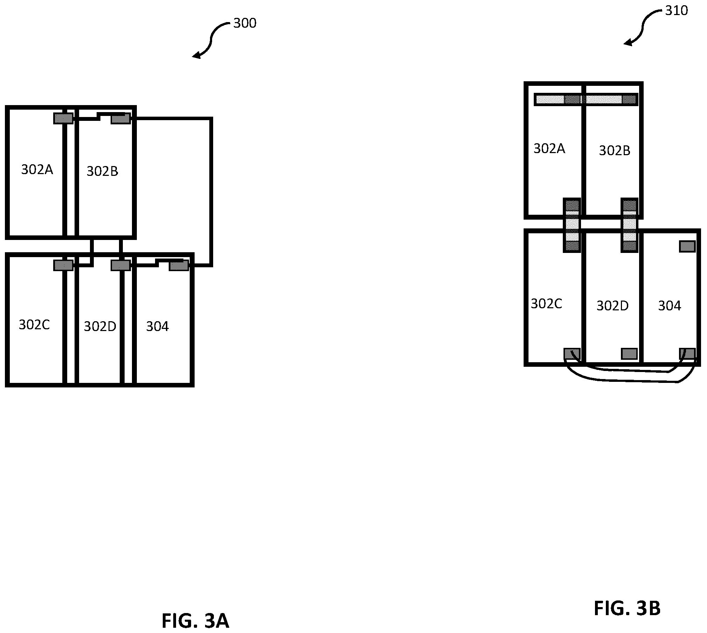

The transceiver 208 can include a 125 MHz Quad multipoint- low-voltage differential signal (LVDS) transceiver. The transceiver 208 can be configured to enable communication of the training device without overlapping signals, by detecting and preventing collision, as described with reference to FIG. 3. The transceiver 208 can be optimized for low dynamic power consumption. The transceiver 208 can be connected to the ports 210A, 210B. The ports 210A, 210B can include an upper port 210A and a lower port 210B.

The high voltage digital potentiometer 212 can be used in a waveform generator 200 when using a 2-wire (A and B) pin connection to properly set the constant current circuitry for proper biasing. The display 214 can include an SSD1306 display including a display grid with A,B,C,D, E columns and 1... 8 rows. A default position of the display can be "A1" (column A, row1) with the letter orientation being displayed in the grid reference letters/numbers. At boot up the display should display the following information (reading from 1 to 8, or top to bottom): name of training device, a firmware revision, a serial number of the training device stored on the EEPROM 216. The display provides feedback the user including functions of the training device. As such, it is recommended that that the screen displays the following attributes start from row 1 with texts going from A to E. Line 1 can report back what card was sense at boot. For a SAR reading of 0x000 to 0x09 it can display "PAV". For a SAR reading of 0x270 to -0x260 it can read "PAS." For a SAR reading of 0xE00 to 0xE10 it can read "PAA." For a SAR reading of oxFC0 to 0xFE0 it can read "PAE." For a SAR reading of 0xFF0 to 0xFFF it can read "KPH." Line 2 can report how a channel of one of the multiplexers 206A, 206B, 206C has been configured for channel 1. If the channel 1 has no output signal it can read "OFF." If the signal is going into the SIG pin it can read "SIG1." If the signal is going into the A/+ pin it can read "A+1." If the signal is going into the B/- pin DC coupled it can read "B-DC1." If the signal is going into the B/- pin AC coupled it can read "B-AC1." Line 3 can denote the type of signal that is being inputted into channel 1. If the signal is a sine wave it can read "sine." If the signal is 1x of the running frequency and not a sine wave it can read "1x." If the signal is 2x of the running frequency and not a sine wave it can read "2x." If the signal is nx of the running frequency and not a sine wave it can read "nx." If the signal is a multi-event wheel "MEW." If the signal is arbitrary it can read "ARB. If the signal is user defined "xxxxx" where XXXXX is an ascii definition in the external EEPROM per a MEMORY table. If the channel is off it can read " ." Line 4 includes more attributes of channel 1 signal and is optional and is defined by the firmware. Line 4 can include the frequency "xKhz" where x is the frequency, the ADC count average for read the A/+ if the MUX has not been set to something else, and "FILEx" where x is the file number it is running from the ARB waveform from line 3. Line 5 can report how channel mux has been configured for channel 2. If the channel 2 has not output signal it can read "OFF." If the signal is going into the SIG pin it can read "SIG2." If the signal is going into the A/+ pin it can read "A+2". If the signal is going into the B/- pin DC coupled it can read "B-DC2." If the signal is going into the B/- pin AC coupled it can read "B-AC2." Line 6 can denote the type of signal that is being inputted into channel 2. If the signal is a sine wave it can read "sine." If the signal is 1x of the running frequency and not a sine wave it can read "1x." If the signal is 2x of the running frequency and not a sine wave it can read "2x." If the signal is nx of the running frequency and not a sine wave it can read "nx." If the signal is a multi-event wheel it can read "MEW." If the signal is arbitrary it can read "ARB." If the signal is user defined "xxxxx" where XXXXX is an ascii definition in the external EEPROM per the MEMORY table. If the channel is off it can read " ." Line 7 can include more attributes of channel 2 signal and is optional and can be defined by the firmware, such as for the frequency "xKhz" where x is the frequency, the ADC count average for read the A/+ if the MUX has not been set to something else, and "FILEx" where x is the file number it is running from the ARB waveform from line 3. Line 8 can indicate to the user more about what the training device is doing. If it still in arbitration mode it can read "STDBY," If it sense no one else and is a standalone device it can read "---," If it is a slave in arbitration mode it can read "SYNC," If it is the arbitrator it can read "MASTR" this could also be done by inverting the display. If it is connected to the USB "USB" or other functionalities of the training device.

The EEPROM 216 can be used for asset information and other wave form generation. The EEPROM 216 can include a memory structure including PSoC EEPROM and an external EEPROM as indicated in the table below.

| PsoC EEPROM (BOT) | |
|---|---|
| **ADDRESS** | **Notes** |
| 0x0000 - 0x0009 | Serial number (10 bytes) LSB at 0x0000 |
| 0x000A<br>0x000E | Application revision |
| 0x000F<br>0x0014 | Unused (maybe something about hardware?) |

(continued)

| PsoC EEPROM (BOT) | |
|---|---|
| **ADDRESS** | **Notes** |
| 0x0015 | boot loader startup flags<br>bit 7: 1= start bootloader<br>bit7: 0 = launch application<br>bits 0-6: unused |
| 0x0016<br>0x07FF | Unused |
| **External EEPROM (TOP_** | |
| **Address** | **Notes** |
| 0x00000 0x00009 | Serial number (10 bytes) LSB at 0x0000 |
| 0x0000A<br>0x0000E | hardware identifier |
| 0x0000F<br>0x00014 | hardware config (8bit iDac vs 12bit?) |
| 0x00015<br>0x0001A | Ascii string denoting channel 1-A waveform (note each channel can select two waveforms A or B) |
| 0x0001B<br>0x0001C | Channel 1-A waveform length |
| 0x0001D<br>0x0081D | Waveform 1-A data (1024 16 bit values) |
| 0x0081E<br>0x00823 | Ascii string denoting channel 1-B waveform data |
| 0x00824<br>0x00825 | Channel 1-B waveform length |
| 0x00826<br>0x01026 | Waveform 1-B data (1024 16 bit values) |
| 0x01027<br>0x0102C | Ascii string denoting channel 2-A waveform |
| 0x0102C<br>0x0102D | Channel 2-A waveform length |
| 0x0102E<br>0x0182E | Waveform 2-A data (1024 16 bit values) |
| 0x0182F<br>0x01834 | Ascii string denoting channel 2-B waveform data |
| 0x01835<br>0x01836 | Channel 2-B waveform length |
| 0x01837<br>0x02037 | Waveform 2-B data (1024 16 bit values) |
| 0x02038<br>0x03E80 | Unused |

**EEPROM table**

The converters 218A, 218B can include an inverting buck boost circuit 218A and a voltage output digital-to-analog converter (vDAC) 218B. The inverting buck boost circuit 218A (e.g., analog device) can be used to generate +4.6V used in all the sub system of the waveform generator 200. The diodes can be oversized as the inverting buck boost circuit 218A needs to handle a delta voltage of ~30V statically and about ~50V over transient switching at boot. The inverting buck boost circuit 218A can include a 3-pin Microcontroller Power Supply Supervisor that is used in conjunction of a PMOSFET to ensure that the analog device does not see the external load until the transients switching is completed. The inverting buck boost circuit 218A can be connected to the reference signal generator 220. The reference signal generator 220 can include a 3.3V reference that is used for the DAC circuit to create a more precise output voltage. The vDAC 218B can include a 12 bit voltage output digital-to-analog converter. The vDAC 218B can be configured to facilitate different frequencies with a common clock. The vDAC 218B can be a 12 bit string DAC (TI DAC121S101) that can have the following transfer function from bits to Voltage out. It is important to note that there is an additional inverting op amp stage that will generate the negative voltage needed for the conditioning monitoring system.

$$V_{out} = V_a \times \frac{D}{2^n} \times -7.79$$

The USB drive 222 can include a diode on the power pin to direct the power to the control unit 204 and to prevent reverse voltage flowing into the wrong device.

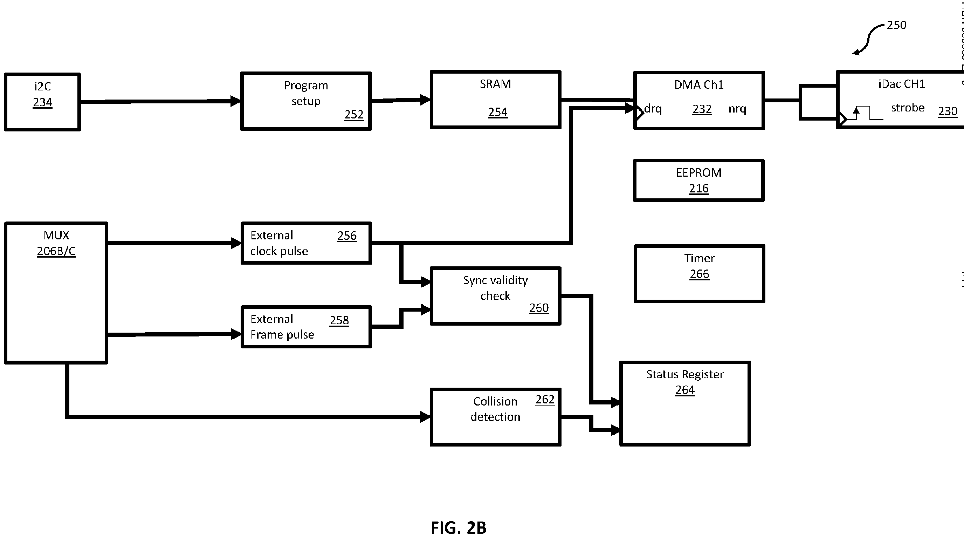

As illustrated in FIG. 2B, the control unit 204 includes i2C bus 234 configured for program setup 252, where the first 7 bits can be used to indicate the address of a waveform generator component and the 8th bit is used for either reading or writing to the address of a waveform generator component, as illustrated in the following example table.

**Table 2: Training device**

| Device | i2c Address | MFG PN | Notes |
|---|---|---|---|
| Extern EEPROM | 1010000 (R/-W-) | M24128-DFMC6TG | Used to store waveform and asset info |
| SAR ADC | 1010001 (R/-W-) | ADC121C027CIMK | Used to determine what card type the Training device is connected too |
| Oled Display | 011 110, SA (R/W-) | SSD1306 | SSD1306 oled driver, SA is set to 0 or 1 by MFG |
| Port Expander | 1110000 (R/-W-) | PCA9538BS,118 | This controls the MLVDS power down, FSEN and Read enble pins |
| Ch1 Digi pot | 011 110, x (R/-W-) | MCP45HV31 | 7-bit high voltage digi pot (X bit is set by R30 and R31) |
| Ch2 Digi pot | 011 1111 (R/-W-) | MCP45HV31 | 7-bit high voltage digi pot |

A (32 kB) SRAM 254 can be used to process the program setup 252. The SRAM 254 provides output to DMA 232, The DMA 232 provides means by which peripherals run without intervention of the CPU and run near main clock speeds, according to the external clock pulse 256 and external frame pulse 258. Generating signals (simulated waveforms) according to timing operations of the iDAC 230, based on the timer 266, enables synchronized board to board communication. A validity of the synchronicity can be checked 260 and collision can be detected to generate a status register 264.

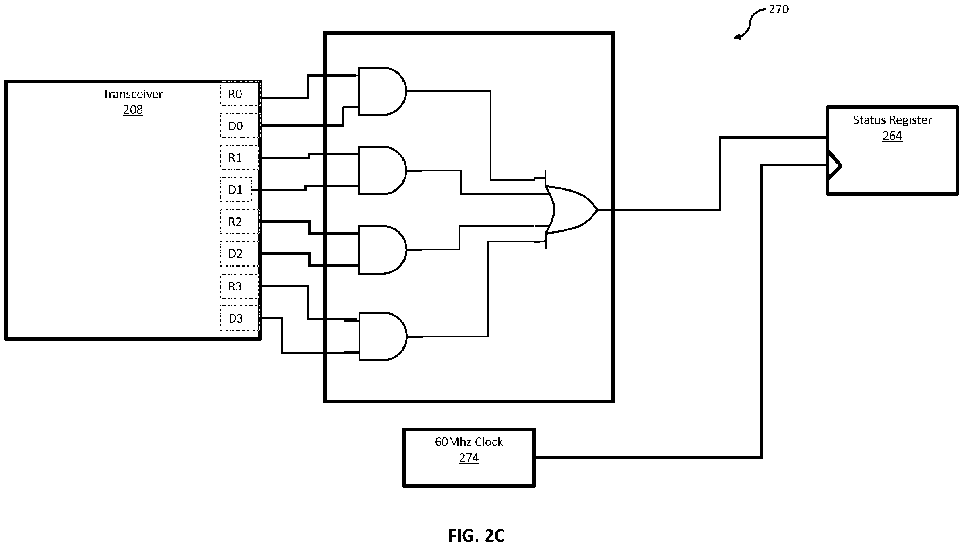

Referring now to FIG. 2C, a schematic illustration of an example of a collision detection 270 is provided. The transceiver 208 (quad MLVDS type 2) can be configured to detect a potential collision of simultaneous waveform signal transmission being configured for driving / receiving clock or data signals to / from multiple multipoint systems (conditioning monitoring system and waveform generator). The transceiver 208 can be configured to both read (Rx pin) and transmit (Tx pin) every bit and see if there was a collision. For example, if the bit pattern 0xAA was written out and 0xAF was read back than there was a collision. In addition to sensing a collision, the transceiver 208 can either idle logic high or in the invalid region depending on how the fail-safe enable pins are set. To ensure how the system can behave, the fall-safe enable pin could be set so that the idle state of the training device can be high and is a key to starting the arbitration of the training device. In some implementations, if the transceiver 208 detects a potential conflict (e.g. bus collisions, contention, resource collisions, resource starvation, protocol violations, etc.), the transceiver 208 can re-schedule (re-time, re-order, etc.) transmission of the simulated waveform signals to avoid such conflicts. In some implementations, a sticky status register 264 can provide a sticky version of the particular channel's status register, polling the signal received from the transceiver 208 and a 60 MHz clock 274.

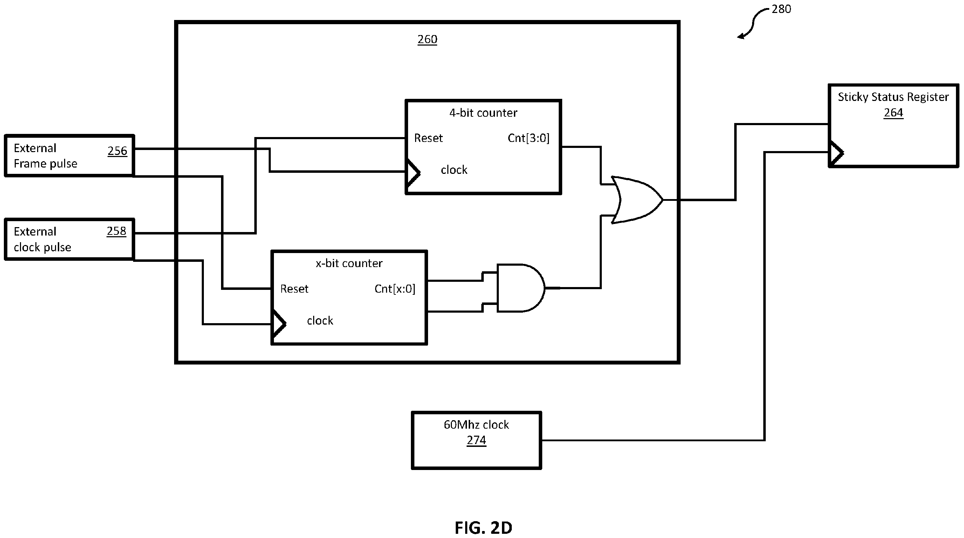

Referring now to FIG. 2D, a schematic illustration of an example of synchronization validity check 280 is provided. The synchronization validity check module 260 can be configured to help facilitate synchronization of signals having different frequencies with a common clock using signal division with counters and AND/OR gates. The synchronization validity check module 260 can ensure proper timing and no miss counts / or time synchronization issues within the training device system. As depicted, the synchronization validity check module 260 can receive signals from the external frame pulse 256 and the external clock pulse 258. The synchronization validity check module 260 can process the received signals using a 4-bit counter and an x-bit counter. In some implementations, the sticky status register 264 can provide a sticky version of the particular channel's status register, polling the signal received from the synchronization validity check module 260 and the 60 MHz clock 274.

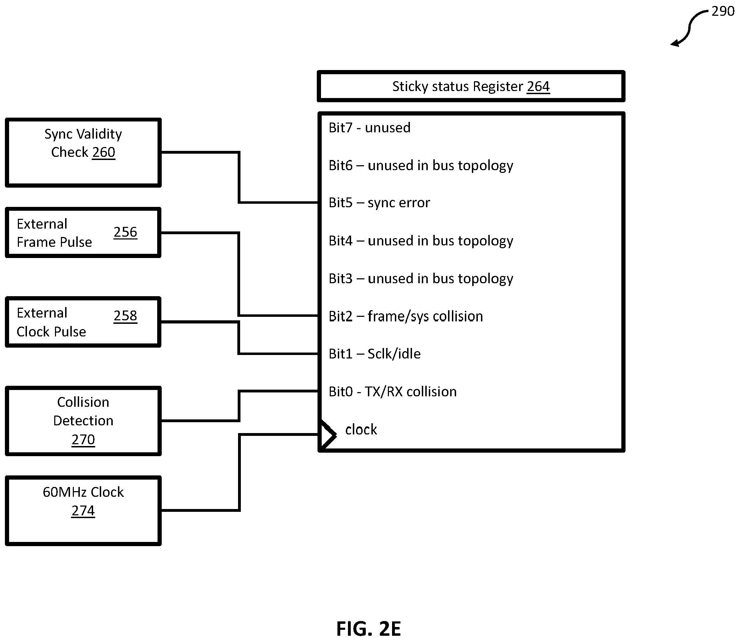

FIG. 2E illustrates the integration of the collision detection with the synchronization validity check 290. In some implementations, the sticky status register 264 can assign bit 0 to transmission/reception collision, bit 1 to idle, bit 2 to frame or system collision, bit 3 and 4 can be unused in bus topology, bit 5 can show synchronization errors and bit 6 and 7 can be unused in bus topology.

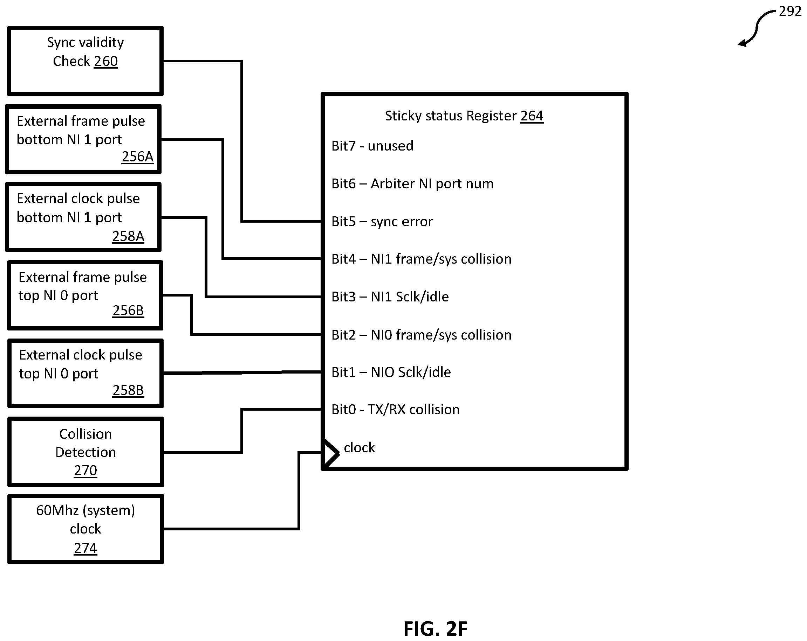

FIG. 2F illustrates the integration of the collision detection with the point-to-point arbitration check 292. In some implementations, the sticky status register 264 can use multiple bits to tell the program if the arbiter is in NI PORT A or 0 (set to 0) or Arbiter is in NI PORT B or 1 (set to 1).

FIGS. 3A and 3B illustrate examples of topologies 300, 310 that can be used for training multiple condition monitoring systems using a single training device 304. The bus network topologies 300 illustrated in FIG. 3A show connections between multi-channel condition monitoring systems 302A...302D that can be connected to the training device 304, which can generate the simulated waveform for all condition monitoring systems 302A...302D in parallel. A technical advantage of using bus network topologies 300 for training multiple condition monitoring systems 3302A...302D is that a lower power supply is needed and faster arbitration can be triggered. The bus network topologies 300 can be implemented using a 2-channel transceiver, as discussed with reference to FIGS. 2A-2F. The bus network topologies 300 illustrated in FIG. 3A only show 2 channel devices, but the same topological principal can also be applied to 4 channel devices.

The point-to-point network topologies 310 illustrated in FIG. 3B show connections between multi-channel condition monitoring systems 302A...302D that can be connected to the training device 304, which can generate the simulated waveform for all condition monitoring systems 302A...302D in parallel. Some technical advantage of using point to point network topologies 310 for training multiple condition monitoring systems 302A... 302D include an easy connection scheme, lower power supply needed, and high node limit. The point-to-point network topologies 310 can be implemented using a 2-channel transceiver, as discussed with reference to FIGS. 2A-2F. The point-to-point network topologies 310 illustrated in FIG. 3B only show 2 channel devices, but the same topological principal can also be applied to 4 channel devices.

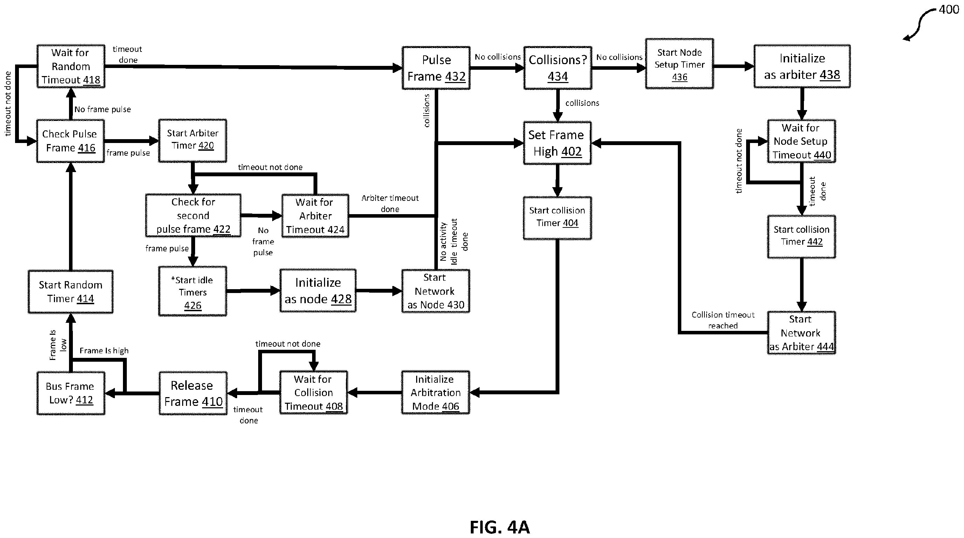

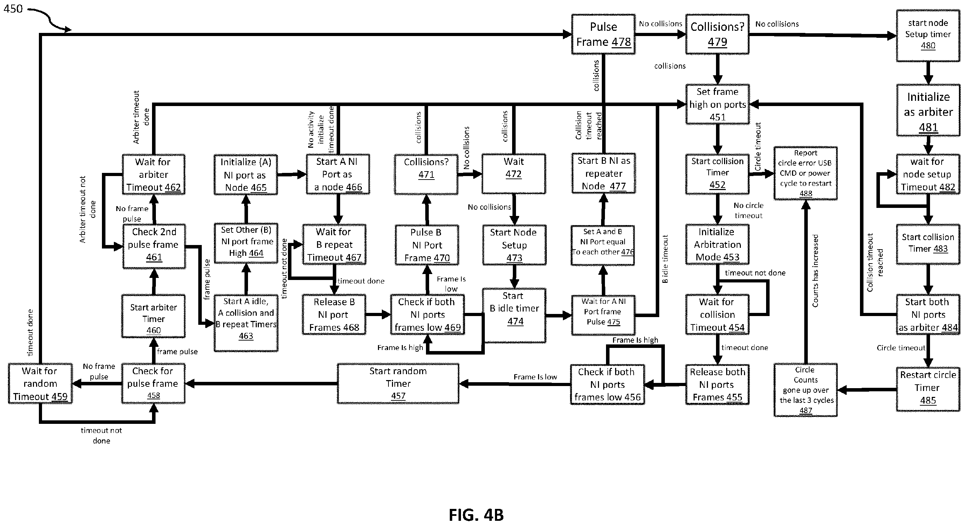

FIGS. 4A and 4B illustrate examples of arbitration for bus network and point to point network, respectively. FIG. 4A illustrates a bus arbitration method 400, which can be applied to training devices configured to generate simulated waveforms for training condition monitoring systems. The i2C bus of the training device (e.g., i2C bus 234 described with reference to FIGS. 2A and 2B) is provided with a bus arbitration unit, the bus arbitration unit can be provided with a status register (e.g., sticky status register 264 described with reference to FIGS. 2A -2F). The status register can be defined with a BUSY zone bit, a WAIT zone bit and an ERROR zone bit, wherein the BUSY zone bit can be used for indicating an i2C bus occupation state, the WAIT zone bit can be used for indicating an i2C bus waiting release state, and the ERROR zone bit can be used for indicating an i2C bus fault state. The bus arbitration method 400 of the i2C bus can be initiated by setting the frame high (402). The set frame can be used to start the collision timer (404). The collision timer can be equal to idle time or can be less. Idle timer can be based on the clock pin, not the frame pin. If the collision timer is less than the idle time, the collision timer can be long enough for an initial boot and it does not create an undefined state. If the idle time can be much shorter than the collision time than only the idle time can be considered. The collision timer can be used to initialize arbitration mode (406). The initialization of arbitration mode can stop the DMA, reinitialize the pointers, clear and initialize the counters, and clear out all status register bits. The arbitration mode can be set to wait for collision timeout (408). This timeout notifies the bus that components need to enter arbitration mode and the frame of the transceiver (type 2 MLVDS) can float low. After timeout is reached, a waveform signal frame can be released (410). It can be determined whether bus frame is low, which can be treated as a flag that the network is ready for an arbiter (412). If bus frame is high, it can be set to low. If the bus frame is low, random timer can be started (414). The pulse frame can be checked (416) and if no frame pulse, the bus network waits for random timeout (418). If frame pulse is detected, arbiter timer can be started (420). If timeout is done, second pulse frame can be checked (422) and if no frame pulse, the bus network waits for random arbiter timeout (424). If frame pulse is detected, idle timers can be started (426) and initialization as node is executed (428) to start bus network as node (430). Pulse frame can be set (432), for example by resetting collision timer timeout, which can be based off the frame pin. It can be determined whether collisions are detected (434). If collisions are detected, the frame can be set high, and the receiver pins can be disabled to save power (402). If no collisions are detected, the start node timeout is less than idle bus timeout and a time is defined for all nodes to initialize themselves (436). The bus network can be initialized as arbiter (438), by setting up the clocks and the transceiver (e.g., 2 channel MLVDS IC would consume less power). Wait for timeout of the node setup (440). Collision timer can be started (442). The collision timer can be continuously reset on a clock pin of the system. After collision timer is started, the bus network can be activated as arbiter (444).

FIG. 4B illustrates a point-to-point arbitration method 450, which can be applied to training devices configured to generate simulated waveforms for training condition monitoring systems. The point-to-point arbitration method 450 can be initiated by setting the frame high on both transceiver ports of the training device (451). The set frame can be used to start the collision timer (452). Arbitration mode can be initialized (453). Collision timeout can be waited (454). Port frames can be released (455). It can be determined whether the port frame is low (456). For low port frame, random timer seeded by UID can be started (457). Pulse frame can be checked (458). The training device waits for random timeout (459). Arbiter timer can be started (460). Second pulse frame can be checked (461). Second pulse frame can be checked (461). If no frame pulse, the training device waits for arbiter timeout (462). If arbiter timeout is done, the point-to-point arbitration method 450 returns to setting the frame high on both transceiver ports of the training device (451). If frame pulse, start port A idle, port A collision can be verified, and timers can be repeated for port B (463). Set other port frames to high (464). Port A can be initialized as a node (465). The port A can be set as a node (466). Wait for port B repeat timeout (467). Release port B frames (468). Check if both port frames are low (469). Check pulse frame for port B (470). Determine if collisions are detected for port B (471). The training device can be set to pause operations for a set time (472). After set time for waiting, the node setup can be started (473). Start idle timer for port B (474). The system can be configured to wait for frame pulse from port A (475). Ports A and B can be set equal to each other (476). Start B port as repeat node (477). Pulse frame can be checked (478). Collisions can be detected (479). If no collisions, the point-to-point arbitration method 450 returns to setting the frame high on both transceiver ports of the training device (451). If collisions are detected node setup timer can be started (480). Arbiter can be initiated (481). Wait for node setup to timeout (482). Start collision timer (483). Start both ports as arbiter (484). Restart circle timer (485). Detects when circle counts went over last 3 cycles (486). Report circle error USB CMD or power cycle to restart (488). After circle timeout, the point-to-point arbitration method 450 returns to setting the frame high on both transceiver ports of the training device (451).

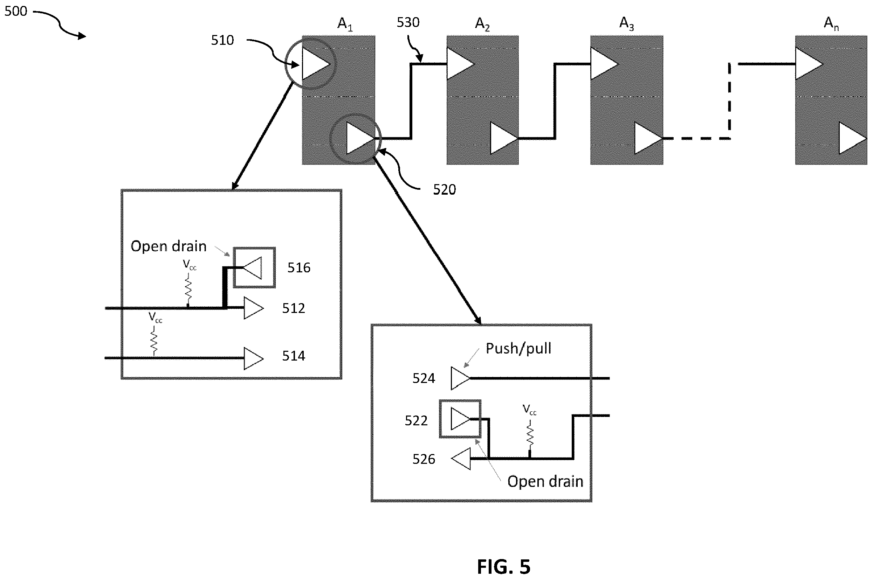

In operation, using either the bus or point to point arbitration methods descried above, any training device (e.g., training device 304) in a chain of training devices that can be configured to each generate synchronized, simulated waveforms for training condition monitoring systems, can arbitrate a master, and lock phase/synchronization between the devices in the chain. FIG. 5 is a diagram illustrating a system 500 of training devices (A1-An) coupled together. The description provided below will discuss how master arbitration can be resolved for the system 500, using the arbitration methods described above, how lock synchronization in a new system 500 can be executed, and how new training devices can be added to an existing system 500 (or other grouped networks).

FIG. 5 is a diagram illustrating a plurality of training devices coupled together to form a communicating network of training devices. As shown in FIG. 5, each training device (A1 ... An) of the system 500 can include an input port 510 and an output port 520. In some embodiments, the input/output ports 510, 520 can be included in the connections 113a, 113b of FIG. 1A. In some embodiments, the input/output ports 510, 520 can be powered by the power generator of the training device. The output port 520 of one training device (e.g., device A1) can be configured to connect to the input port 510 of another device (e.g., device A2) via a connection (line) 530. In some embodiments, the connection 530 can comprise a clock connection and a frame connection. The clock connection can be configured to connect a clock-in pin 512 at each input port 510 and a clock-out pin 522 at each output port 520. Similarly, the frame connection can be configured to connect a frame-in pin 514 at each input port 510 and a frame-out pin 524 at each output port 520. The connection 530 formed between each training device (A1 ... An) can provide the devices with the capability to achieve both master arbitration and device synchronization, depending on the mode of operation the system is in, as described below.

In some embodiments, the frame-out pin 524 can be configured to drive the line to either a logic high state or logic low state. The frame-in pin 514 can be a high impedance pin, and thus unable to drive its input to the logic high state or the logic low state. The frame-in pin 514 can include a pull up resistor to place its input to a known state when there is no up-stream device driving its input to a logic high or low state (e.g., in the case of device A1 of FIG. 5).

In some embodiments, the clock connection can also include a collision connection configured to connect a collision sense (collision-in) pin 526 to a collision assert (collision-out) pin 516. In this case, the clock-out pin 522 can set the output logic low, but require an external pull up resistor to pull the line to a logic high (also known as an open drain configuration, as shown in FIG. 5). This can allow a collision-in pin 526 to sense a downstream device pulling the line to a logic Low state even though the clock-out pin 522 has released the line 530 (allowing the pull up resistor to pull the bus high). For example, in the case of device A1, the downstream device (A2) can sense the upstream device (A1) clock-out state through the A2 clock-in pin 512. If the downstream device (A2) senses a fault or issue within itself or a downstream device (e.g., A3), it can pull the clock interface to a logic-low state through the A2 collision out pin 516.

When the system is in a master arbitration mode, the system 500 of training devices A1-An can be configured to perform form a startup function along with one or more functions including a removal of slave function, a removal of master function, an adding slave function, an adding master function, a combining multiple chains function and a chain length exceeded function. In some embodiments, after performing any of the functions listed above, the system 500 can be configured return to the startup function. Additionally, once the system has completed the startup function and/or the one or more other functions, the system can be configured to transition into a synchronization mode, as described below.

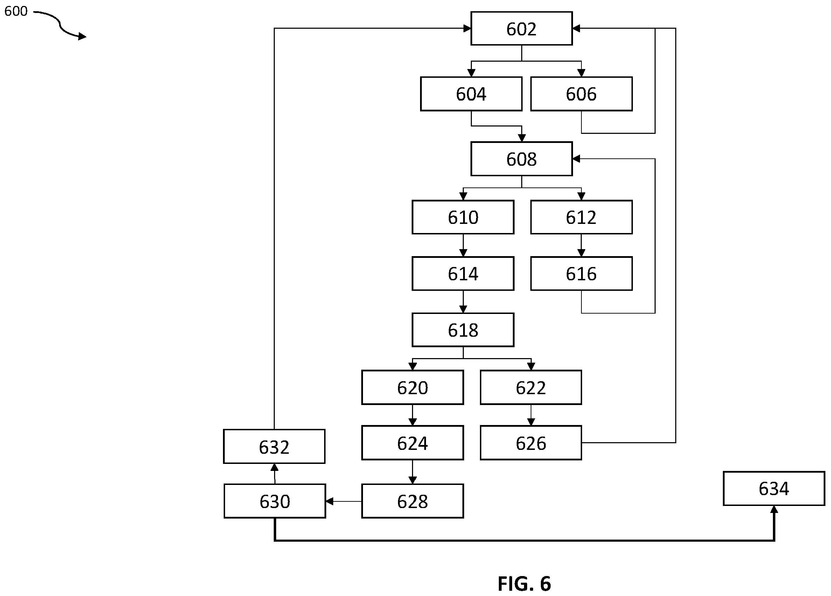

FIG. 6 is a flow chart 600 illustrating a method of performing master arbitration in a system (e.g., system 500) of training devices and further performing time synchronization within the system. The method of FIG. 6 will be described in greater detail below, with references made to the system 500 of FIG. 5. In some embodiments, the method can be an algorithm that is carried out for each training device by the computing system of that training device. As described above, the connection 530 between devices (including the frame connection and the clock connection) can be used for master arbitration and synchronization of the system 500. Other functionalities performed by the devices A1-An, including waveform generation, can be communicated between devices A1-An using an external data interface, as described above (e.g., via transceiver 208 of FIG. 2A).

During the startup function, at 602, each device A1-An can be configured to set their collision-out pin 516 of each input 510 and the frame-out pin 524 of each output 520 to a logic low state. This can allow the system 500 to determine a master. Responsive to 602, a master can be identified, at 604, or a time out can occur, at 606. In the event that a time out occurs, each device can be configured to return to 602 and begin the master identification process again until a master is identified. For example, at 602, the most upstream device A1 can be configured to determine that it is the master of the system 500, as device A1 has nothing connected to its input 510. In this case, the frame-in pin 514 will be logic high due to the pull up resistor. Similarly, device An, at the end of the chain, can be configured to determine that it is the end of the chain, as there is no downstream collision-out pin 516 driving the collision-in pin 526 of An low. Accordingly, the collision-in pin 526 of An will float to logic high due to the external pull up resistor. Once the master is identified, the master can be configured to send out a pulse on its frame out pin, at 608. Responsive to the pulse being sent out at 608, the slave adjacent to the master can either acknowledge the pulse, or not. If the adjacent slave acknowledges the pulse, they can be configured to transmit a response, at 610, on their collision-out pin, back to the master. If there is no acknowledgement, represented by 612, a time out can occur, at 616, and the master can be configured to repeat the process of 608 a predetermined number of times before determining that there are no slaves in the system. Upon determining that there are no slaves in the system, master arbitration can be complete and the master can begin operating as described above.

Responsive to the adjacent slave acknowledging the pulse, and transmitting the response, at 610, the master can wait a first predetermined amount of time, at 614, before sending a pulse to the adjacent slave, at 618, notifying the adjacent slave that it is the second device in the system chain. Responsive to the transmission by the master at 618, the adjacent slave can either acknowledge the pulse, or not. If the adjacent slave acknowledges the pulse, they can be configured to transmit a response, at 620, on their collision-out pin, back to the master. Responsive to receiving the adjacent slave's acknowledgement, at 620, the master can be configured to set its frame-out pin to the logic high state at 624, and the adjacent slave can be configured to hold its collision out pin at the logic low state, at 628. If there is no acknowledgement, represented by 622, after a second predetermined amount of time, at 626, the master can be configured to set its clock out pin to the logic-low state and return to 602. In some embodiments, by the master setting its clock out pin to the logic-low state and returning to 602, the master can determine that a slave has been removed from the chain and initiate the slave removal function, as discussed in greater detail below. In the event that there are multiple slaves in the system (e.g., A2, A3, An), each slave can repeat the process above of transmitting a pulse to its subsequent slave, notifying the subsequent slave that it is the nth device in the system chain. Responsive to each slave transmission, each subsequent slave can either acknowledge the pulse, or not. If the subsequent slave acknowledges the pulse, they can be configured to transmit a response, on their collision-out pin, back to the upstream slave. This process can be repeated for all slaves in the chain in order to determine the number of slaves in the chain. During this process, the master can be configured to wait a third predetermined time, at 630, for the downstream slaves to report back the number of slaves in the chain. In the event that the downstream slaves report back within the third predetermined time, the master can determine that the master arbitration is complete and the master can begin the time synchronization function, at 634, as described in greater detail below. In the event that the downstream slaves do not report back within the third predetermined time, the master can determine, at 632, that the chain is too long, and can return to 602 to perform the chain too long function, as described in greater detail below.

During the slave removal function, the master determined (A1) can be configured to query the other devices A2-An in the chain through an external data interface, described above. During this query, if a device does not report back to A1, A1 can be configured to determine that a break in communication has occurred at the location of the device that did not report back to A1.

During normal operation, as described above in reference to 608, the master can be configured to transmit its frame signals to the slaves A2-An at a predetermined frequency. Accordingly, during a master removal function, any of the slave devices A2-An can be configured to time the frequency at which frames are received from the master, A1. If a frame is not received within the predetermined frequency, any of the devices A2-An can be configured to determine that a time-out has occurred. Once one slave A2-An determines that a time-out has occurred, the slaves can be configured to remove A1 as the master and return to 602 to determine a new master.

During a slave added to chain function, when a salve is added to the chain, the slave added can be configured to set its collision-out pin 516 and frame-out pin 524 to the logic low state. For example, if a device An is added to the chain, and connected to A3, the addition of An can notify the slave upstream device A3, through the collision-out pin of A3, that a fault or new device has been added. Responsive to this notification, slave A3 can be configured to set its frame-out pin 524 and collision-out pin 516 to the logic low state, which can notify all other slaves and the master that the new device An has been added to the chain. Once the slave added to chain function is complete, the system can be configured to return to 602 to determine if master arbitration is complete and the system is ready to be time synchronized.

During a master added to chain function, when a new master is added to the chain, the old master can be configured to detect the new master in a variety of ways. For example, in a case where the old master is device A2, when a new master A1 is added to the chain, the old master A2 can be configured to detect the new master A1 responsive to the frame-in pin 514 of the old master A2 going to the low state. In some embodiments, when the new master A1 is added to the chain, the old master A2 can be configured to detect the new master A1 responsive to receiving clock pulses transmitted into clock-in pin 512 of the old master A1. Responsive to determining that a new master A1 has been added to the chain, the old master A2 can be configured to change its collision-out pin 516 to the low state and its frame-out pin 524 to the low state. This can notify both upstream devices and downstream devices that a new master A1 has been added. Accordingly, responsive to completing the master added to chain function, the system can be configured to return to 602 to determine if master arbitration is complete and the system is ready to be time synchronized.

In some embodiments, the combining multiple chains function can operate similarly to the master added to chain function described above. For example, during the combining multiple chains function, a downstream chain can be added to an upstream chain. In this case, a downstream chain master can be configured to receive clock and frame pulses on its input 510 being transmitted from an upstream slave of the upstream chain. In this case, similarly to as described above, once the downstream chain master has detected the upstream chain, the downstream chain master can be configured to change its frame-out pin 524 and collision-out pin 516 to the low state. Responsive to this, the downstream chain and the new chain system can be configured to return to the startup function.

In some cases, when multiple devices are added to a system chain, or multiple system chains are linked, the system chain can become too long. In some embodiments, the maximum system chain length can be determined based on the third predetermined time, described above. The system can be configured to determine if the chain is too long during a chain too long function. If the system chain is too long, all slaves in the chain will eventually reach a time out, which will be transmitted to the master and presented in the GUI thereof (e.g., GUI 115 of FIG. 1) to notify a user that the chain is too long.

As described above, once any of the functions described above are completed, the system can be configured to return to 602 to determine if master arbitration is complete and the system is ready to be time synchronized. Once master arbitration is complete, the devices of the system can be configured to begin the synchronization function at 634. It should also be noted that once the master has been arbitrated and the system chain is functioning properly, the master can be configured to query all downstream devices through the external data interface in order to determine the total number of devices in the system chain.

Once the master has been arbitrated and the system chain is functioning properly, the devices A1-An can be configured to transition into the time synchronize mode to synchronize the inputs and outputs of each device to more accurately mimic a series of outputs that would typically by provided to a monitoring system(s) from a plurality of sensors configured to monitor an industrial asset. In the synchronization mode, the master (e.g., A1) can begin the time synchronization by transmitting its clock down to all downstream devices A2-An. After a predetermined number of clock cycles, a frame pulse can be transmitted down to all downstream devices to indicate a phase relationship to the clock pulses. This allows all devices in the chain to know where in time a periodic event should occur along with a self-check if the frame did not occur when expected. In some embodiments, if a device in the system detects that its phase is out of sync with the frame pulse not occurring within a certain time (which can occur, for example, when a master is removed from the system), the system can be configured to transition back into the master arbitration mode to perform the one or more functions described above.

The functionality described in above can provide the training device(s) in a system (e.g., system 500) with playback functionality on complex waveforms/monitored machine trains (such as LNG machines) into a condition monitoring system for enhanced diagnostics or modeling of complex industrial machinery. Further, the functionality described in FIGS. 5-6 can provide the training device(s) with an ability to perform periodic diagnostic or safety checks on the condition monitoring system to validate that the monitoring system is still working and/or resolve any undetected failures that are not caught by the monitored machinery (i.e. catastrophic failures resulting in a lost of an asset).

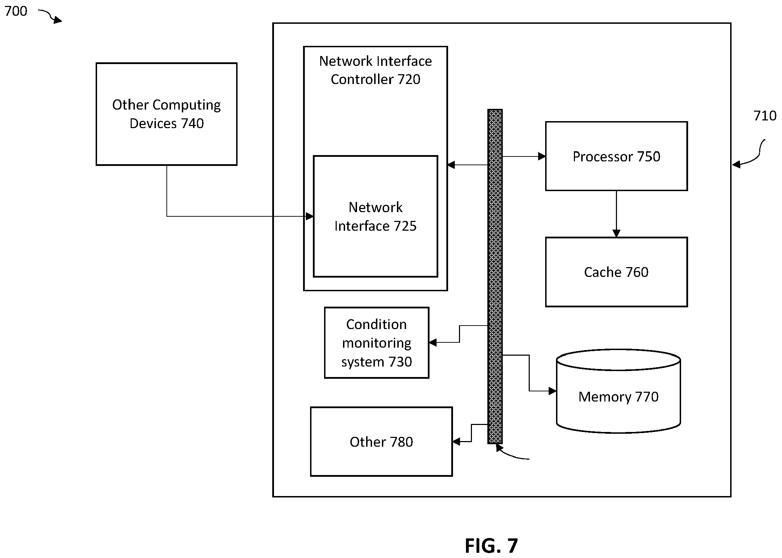

FIG. 7 is a block diagram 700 illustrating another embodiment of a computing system 710 suitable for use in implementing the computerized components of the training device described herein, such as the training device 102. In broad overview, the computing system 710 includes at least one processor 750 for performing actions in accordance with instructions, and one or more memory devices 760 and/or 770 for storing instructions and data. The illustrated example computing system 710 includes one or more processors 750 in communication, via a bus 715, with memory 770 and with at least one network interface controller 720 with a network interface 725 for connecting to one or more condition monitoring systems 730. The one or more processors 750 are also in communication, via the bus 715, with each other and with any other devices 780 (e.g., a GUI). The processor 750 illustrated incorporates, or is directly connected to, cache memory 760. Generally, a processor will execute instructions received from memory.

In more detail, the processor 750 can be any logic circuitry that processes instructions, e.g., instructions fetched from the memory 770 or cache 760. In many embodiments, the processor 750 is an embedded processor, a microprocessor unit or special purpose processor. The computing system 710 can be based on any processor, e.g., suitable digital signal processor (DSP), or set of processors, capable of operating as described herein. In some embodiments, the processor 750 can be a single core or multi-core processor. In some embodiments, the processor 750 can be composed of multiple processors.

The memory 770 can be any device suitable for storing computer readable data. The memory 770 can be a device with fixed storage or a device for reading removable storage media. Examples include all forms of non-volatile memory, media and memory devices, semiconductor memory devices (e.g., EPROM, EEPROM, SDRAM, flash memory devices, and all types of solid-state memory), magnetic disks, and magneto optical disks. A computing device 710 can have any number of memory devices 770.

The cache memory 760 is generally a form of high-speed computer memory placed in close proximity to the processor 750 for fast read/write times. In some implementations, the cache memory 760 is part of, or on the same chip as, the processor 750.

The network interface controller 720 manages data exchanges via the network interface 725. The network interface controller 720 handles the physical, media access control, and data link layers of the Open Systems Interconnect (OSI) model for network communication. In some implementations, some of the network interface controller's tasks are handled by the processor 750. In some implementations, the network interface controller 720 is part of the processor 750. In some implementations, a computing device 710 has multiple network interface controllers 720. In some implementations, the network interface 725 is a connection point for a physical network link, e.g., a USB connector. In some implementations, the network interface controller 720 supports wireless network connections via network interface port 725. The computing device 710 can be configured to generate waveforms to transmit to the condition monitoring system(s) 730, as described herein.

In some embodiments, the computing device can be configured to connect to other computing devices 740, via the network interface port 725. The other computing device 740 can include a computer, smart phone, or other device configured to transmit waveform data, and other calibration data to the computing device 710. In some embodiments, the other computing device can be a remote controller, or a remote display device configured to communicate and operate the training device remotely. Further, in some embodiments, the other computing device 730 can include another computing device 710 of another training device, which can be linked to the computing system 710 to form a linked chain system, as described herein.

Certain exemplary embodiments have been described to provide an overall understanding of the principles of the structure, function, manufacture, and use of the systems, devices, and methods disclosed herein. One or more examples of these embodiments have been illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon.

Certain exemplary implementations have been described to provide an overall understanding of the principles of the structure, function, manufacture, and use of the systems, devices, and methods disclosed herein. One or more examples of these implementations have been illustrated in the accompanying drawings. Those skilled in the art will understand that the systems, devices, and methods specifically described herein and illustrated in the accompanying drawings are non-limiting exemplary implementations and that the scope of the present invention is defined solely by the claims. The features illustrated or described in connection with one exemplary implementation may be combined with the features of other implementations. Such modifications and variations are intended to be included within the scope of the present invention. Further, in the present disclosure, like-named components of the implementations generally have similar features, and thus within a particular implementation each feature of each like-named component is not necessarily fully elaborated upon.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

One skilled in the art will appreciate further features and advantages of the invention based on the above-described implementations. Accordingly, the present application is not to be limited by what has been particularly shown and described, except as indicated by the appended claims. All publications and references cited herein are expressly incorporated by reference in their entirety.

## Claims

1. A device comprising:

   a plurality of connections configured to communicatively couple the device to one or more condition monitoring systems; and
   a computing system including a power generator configured to retrieve power from the one or more condition monitoring systems to power the device, at least one data processor and a memory storing instructions which, when executed by the at least one processor, cause the at least one processor to perform operations including

   receiving, from the one or more condition monitoring systems, data characterizing a sensor type of a plurality of sensor types to be coupled to the one or more condition monitoring systems,
   determining a simulated waveform characteristic of the sensor type, and
   transmitting the simulated waveform to the one or more condition monitoring systems to simulate an output from the sensor type.

2. The device of claim 1, further comprising:
   a digital to analog converter configured to convert the simulated waveform determined by the processor from a digital signal to an analog signal to be transmitted to the one or more condition monitoring systems.

3. The device of claim 2, wherein the plurality of sensor types include at least one of a temperature sensor, a current sensor, a voltage sensor, a pressure sensor, a displacement sensor, a velocity sensor, an acceleration sensor, a flow sensors or any combination thereof, configured to monitor an operation of a component of an industrial environment, and wherein the simulated waveform is characteristic of an output from the sensor type.

4. The device of claim 3, wherein the memory is further configured to store data characterizing a plurality of simulated waveforms characteristic of the plurality of sensor types and the processor is configured to determine the simulated waveform based on the data characterizing the plurality of simulated waveforms stored on the memory.

5. The device of claim 1, wherein the simulated waveform comprises one or more features characteristic of data recorded the sensor type monitoring the operation of the component.

6. The device of claim 1, further comprising an input configured to couple the device to a second computing system configured to program the computing system.

7. The device of claim 1, further comprising a graphical user interface display configured to display one or more operations performed by the device.

8. The device of claim 1, wherein the one or more condition monitoring systems includes a plurality of condition monitoring systems, connected to the device in parallel, and the processor configured to transmit the simulated waveform to the plurality of condition monitoring systems.

9. The device of claim 1, further comprising a second plurality of connections configured to communicatively couple the device to one or more second devices, similar to the device.

10. The device of claim 9, wherein the device is communicatively coupled to the one or more second devices and the processor is further configured to perform operations including:

   determining an arbitration process to avoid collisions based on a pulse frame.

11. A system comprising:
   a plurality of devices communicatively coupled to one another in a point-to-point topography and configured to monitor one or more condition monitoring systems, each device comprising

   a plurality of first connections configured to communicatively couple the device to the one or more condition monitoring systems;
   a power generator configured to retrieve power from the one or more condition monitoring systems to operate the device; and
   a computing system including at least one data processor and a memory storing instructions which, when executed by the at least one processor, cause the at least one processor to perform operations including

   receiving, from the condition monitoring system, data characterizing a sensor type of a plurality of sensor types to be coupled to the one or more condition monitoring systems,
   determining a simulated waveform characteristic of the sensor type, and transmitting the simulated waveform to the one or more condition monitoring systems to simulate an output from the sensor type.

12. The system of claim 11, wherein the plurality of devices are configured to perform a startup function to determine a master device and one or more slave devices of the plurality of devices, wherein the at least one processor of the master device is further configured to determine a schedule for the transmission of the plurality of simulated waveforms from the plurality of devices to the one or more condition monitoring systems.

13. The system of claim 12, wherein the at least one processor of the master device is further configured to transmit the schedule to the one or more slave devices, and wherein the master device and each of the one or more slave devices are configured to transmit their simulated waveform to the one or more condition monitoring systems based on the schedule.

14. The system of claim 13, wherein the schedule of the plurality of transmitted simulated waveforms are configured to mimic a series of waveforms that would typically by provided to the one or more condition monitoring systems by the plurality of sensor types monitoring an industrial asset.

15. The system of claim 12, wherein each of the plurality of devices further comprises a graphical user interface display configured to display one or more operations performed by the device, and wherein the at least one processor of the master device is further configured to perform operations comprising:

   determining that one or more slave devices has been removed from the system; and
   providing a notification to the graphical user interface display indicating that the one or more slave devices has been removed from the system.

16. The system of claim 12, wherein each of the plurality of devices further comprises a graphical user interface display configured to display one or more operations performed by the device, and wherein the at least one processor of the master device is further configured to perform operations comprising:

   determining that one or more slave devices has been added to the system; and
   providing a notification to the graphical user interface display indicating that the one or more slave devices has been added from the system.

17. The system of claim 12, wherein the at least one processor of the master device is further configured to perform operations comprising:

determining that a second master device has been added to the system upstream of the master device;
notifying upstream devices and downstream devices of the one or more slave devices that the second master device has been added to the system.

18. The system of claim 17, wherein the at least one processor of the second master device is further configured to determine an updated schedule for the transmission of the plurality of simulated waveforms from the plurality of devices to the one or more condition monitoring systems.

19. The system of claim 12, wherein the master device is removed from the system and the at least one processor of a first slave device of the one or more slave devices is configured to perform operations comprising:

determining that the master device has been removed from the system; and
repeating the step of performing the startup function to determine a new master device and one or more slave devices of the plurality of devices.

20. The system of claim 12, wherein each of the plurality of devices further comprises a graphical user interface display configured to display one or more operations performed by the device, and wherein the at least one processor of the master device is further configured to perform operations comprising:

determining that there are too many slave devices in the system; and
providing a notification to the graphical user interface display indicating that there are too many slave devices in the system.

FIG. 1A

FIG. 1B

FIG. 2A

**FIG. 2B**

FIG. 2C

FIG. 2D

EP 4 345 550 A1

290

Sticky status Register 264

| Bit7 - unused |
| Bit6 – unused in bus topology |
| Bit5 – sync error |
| Bit4 – unused in bus topology |
| Bit3 – unused in bus topology |
| Bit2 – frame/sys collision |
| Bit1 – Sclk/idle |
| Bit0 - TX/RX collision |
| clock |

Sync Validity Check 260

External Frame Pulse 256

External Clock Pulse 258

Collision Detection 270

60MHz Clock 274

**FIG. 2E**

292

| Sync validity Check 260 |
| External frame pulse bottom NI 1 port 256A |
| External clock pulse bottom NI 1 port 258A |
| External frame pulse top NI 0 port 256B |
| External clock pulse top NI 0 port 258B |
| Collision Detection 270 |
| 60Mhz (system) clock 274 |

**Sticky status Register 264**

Bit7 - unused

Bit6 – Arbiter NI port num

Bit5 – sync error

Bit4 – NI1 frame/sys collision

Bit3 – NI1 Sclk/idle

Bit2 – NI0 frame/sys collision

Bit1 – NI0 Sclk/idle

Bit0 - TX/RX collision

clock

**FIG. 2F**

310

302B

302A

302D

304

302C

FIG. 3B

300

302B

302A

302D

304

302C

FIG. 3A

EP 4 345 550 A1

400

Wait for Random Timeout 418 — timeout done

Check Pulse Frame 416 — No frame pulse / frame pulse

Start Arbiter Timer 420

Check for second pulse frame 422 — No frame pulse / frame pulse

Wait for Arbiter Timeout 424 — timeout not done / Arbiter timeout done

*Start idle Timers 426

Initialize as node 428

Start Network as Node 430

Start Random Timer 414

Bus Frame Low? 412 — Frame is low / Frame is high

Release Frame 410 — timeout not done / timeout done

Wait for Collision Timeout 408

Initialize Arbitration Mode 406

Pulse Frame 432 — No collisions / collisions

Collisions? 434 — No collisions / collisions

Start Node Setup Timer 436

Initialize as arbiter 438

Wait for Node Setup Timeout 440 — timeout not done / timeout done

Start collision Timer 442

Start Network as Arbiter 444 — Collision timeout reached

Set Frame High 402

Start collision Timer 404

No activity Idle timeout done

FIG. 4A

450

Pulse Frame 478 — No collisions → Collisions? 479 — No collisions → start node Setup timer 480

Collisions? 479 — collisions → Set frame high on ports 451

Pulse Frame 478 — collisions → Set frame high on ports 451

start node Setup timer 480 → Initialize as arbiter 481 → wait for node setup Timeout 482 → Start collision Timer 483 → Start both NI ports as arbiter 484 → Restart circle Timer 485

Set frame high on ports 451 → Start collision Timer 452 — Circle timeout → Report circle error USB CMD or power cycle to restart 488

Start collision Timer 452 — No circle timeout → Initialize Arbitration Mode 453 — timeout not done → Wait for collision Timeout 454 — timeout done → Release both NI ports Frames 455

Wait for node setup Timeout 482 — Collision timeout reached → Set frame high on ports 451

Restart circle Timer 485 — Circle timeout → Start both NI ports as arbiter 484

Report circle error ... 488 ← Counts has increased — Circle Counts gone up over the last 3 cycles 487

Release both NI ports Frames 455 → Check if both NI ports frames low 456 — Frame is high → Start B idle timer 474

Check if both NI ports frames low 456 — Frame is low → Start random Timer 457 → Check for pulse frame 458

Wait for collision Timeout 454 — B idle timeout → Start B NI as repeater Node 477

Start B NI as repeater Node 477 — Collision timeout reached → Set frame high on ports 451

Set A and B NI Port equal To each other 476 → Start B NI as repeater Node 477

Wait for A NI Port frame Pulse 475 → Set A and B NI Port equal To each other 476

Start B idle timer 474 → Wait for A NI Port frame Pulse 475

Start Node Setup 473 → Start B idle timer 474

Wait 472 — No collisions → Start Node Setup 473

Wait 472 — collisions → Set frame high on ports 451

Collisions? 471 — No collisions → Wait 472

Collisions? 471 — collisions → Set frame high on ports 451

Pulse B NI Port Frame 470 → Collisions? 471

Check if both NI ports frames low 469 — Frame is low → Pulse B NI Port Frame 470

Check if both NI ports frames low 469 — Frame is high → Start B idle timer 474

Release B NI port Frames 468 → Check if both NI ports frames low 469

Wait for B repeat Timeout 467 — timeout done → Release B NI port Frames 468

Wait for B repeat Timeout 467 — timeout not done → Start A NI Port as a node 466

Start A NI Port as a node 466 → Wait for B repeat Timeout 467

Start A NI Port as a node 466 — No activity initialize timeout done → Set frame high on ports 451

Initialize (A) NI port as Node 465 → Start A NI Port as a node 466

Set Other (B) NI port frame High 464 → Initialize (A) NI port as Node 465

Start A idle, A collision and B repeat Timers 463 → Set Other (B) NI port frame High 464

Check 2nd pulse frame 461 — frame pulse → Start A idle... 463

Check 2nd pulse frame 461 — No frame pulse → Start arbiter Timer 460

Wait for arbiter Timeout 462 — Arbiter timeout not done → Check 2nd pulse frame 461

Wait for arbiter Timeout 462 — Arbiter timeout done → Set frame high on ports 451

Start arbiter Timer 460 → Wait for arbiter Timeout 462

Check for pulse frame 458 — frame pulse → Start arbiter Timer 460

Check for pulse frame 458 — No frame pulse → Wait for random Timeout 459

Wait for random Timeout 459 — timeout done → Check 2nd pulse frame 461

Wait for random Timeout 459 — timeout not done → Check for pulse frame 458

FIG. 4B

FIG. 5

EP 4 345 550 A1

600

```
        ┌──────────┐
        │   602    │
        └──────────┘
      ┌──────┴──────┐
┌──────────┐  ┌──────────┐
│   604    │  │   606    │
└──────────┘  └──────────┘
      └──────┬──────┘
        ┌──────────┐
        │   608    │
        └──────────┘
      ┌──────┴──────┐
┌──────────┐  ┌──────────┐
│   610    │  │   612    │
└──────────┘  └──────────┘
      │             │
┌──────────┐  ┌──────────┐
│   614    │  │   616    │
└──────────┘  └──────────┘
      │
        ┌──────────┐
        │   618    │
        └──────────┘
      ┌──────┴──────┐
┌──────────┐  ┌──────────┐
│   620    │  │   622    │
└──────────┘  └──────────┘
      │             │
┌──────────┐  ┌──────────┐  ┌──────────┐
│   632    │  │   624    │  │   626    │
└──────────┘  └──────────┘  └──────────┘
      │             │
┌──────────┐  ┌──────────┐        ┌──────────┐
│   630    │◄─│   628    │        │   634    │
└──────────┘  └──────────┘        └──────────┘
```

**FIG. 6**

FIG. 7

700

710

Network Interface Controller 720

Network Interface 725

Condition monitoring system 730

Other 780

Processor 750

Cache 760

Memory 770

Other Computing Devices 740

Europäisches
Patentamt

European
Patent Office

Office européen
des brevets

# EUROPEAN SEARCH REPORT

Application Number

EP 23 19 6003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/281704 A1 (LYON GEOFF SEAN [CA] ET AL) 29 September 2016 (2016-09-29) | 1-20 | INV.<br>G05B19/042<br>G05B17/02 |
| Y | * paragraphs [0002] – [0022], [0047] – [0062], [0071] – [0081], [0100] – [0117]; figures 11,17 * | 7-9 | |
| Y | EP 3 757 702 A1 (HITACHI LTD [JP]) 30 December 2020 (2020-12-30)<br>* paragraphs [0001] – [0003], [0012] – [0019], [0064] – [0069]; figure 1 * | 7-9 | |
| A | US 2020/072707 A1 (KUSABA NAOKI [JP] ET AL) 5 March 2020 (2020-03-05)<br>* paragraphs [0001] – [0003], [0007] – [0016], [0023] – [0025]; figures 1,2 * | 1-20 | |

TECHNICAL FIELDS
SEARCHED (IPC)

G05B

The present search report has been drawn up for all claims

| Place of search | Date of completion of the search | Examiner |
|---|---|---|
| Munich | 14 February 2024 | Postemer, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6003

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2024

| Patent document cited in search report | | | Publication date | Patent family member(s) | | | Publication date |
|---|---|---|---|---|---|---|---|
| US 2016281704 | A1 | | 29-09-2016 | TW | 201441626 | A | 01-11-2014 |
| | | | | US | 2016281704 | A1 | 29-09-2016 |
| | | | | US | 2019345928 | A1 | 14-11-2019 |
| | | | | US | 2023323872 | A1 | 12-10-2023 |
| | | | | WO | 2014141162 | A1 | 18-09-2014 |
| EP 3757702 | A1 | | 30-12-2020 | EP | 3757702 | A1 | 30-12-2020 |
| | | | | JP | 6945713 | B2 | 06-10-2021 |
| | | | | JP | WO2019163084 | A1 | 03-12-2020 |
| | | | | US | 2021055706 | A1 | 25-02-2021 |
| | | | | WO | 2019163084 | A1 | 29-08-2019 |
| US 2020072707 | A1 | | 05-03-2020 | EP | 3617826 | A1 | 04-03-2020 |
| | | | | ES | 2908712 | T3 | 03-05-2022 |
| | | | | JP | 6907014 | B2 | 21-07-2021 |
| | | | | JP | 2018185634 | A | 22-11-2018 |
| | | | | US | 2020072707 | A1 | 05-03-2020 |
| | | | | WO | 2018198624 | A1 | 01-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63411258